# EUROPEAN PATENT APPLICATION

(11) **EP 1 294 077 A2**
(43) Date of publication of application: **19.03.2003**
(21) Application number: 02019994.9
(22) Date of filing: 05.09.2002
(51) Int. Cl.: H02K 3/34

(54) **Insulator of an armature for rotary electric machines**

(30) Priority: 07.09.2001 JP 2001271367; 29.08.2002 US 64925
(71) Applicant: Kabushiki Kaisha Moric, Shuuchi-gun, Shizuoka-ken (JP)
(72) Inventor: Nagai, Kenji, Shuuchi-gun, Shizuoka-ken (JP); Kondo, Hiroaki, Shuuchi-gun, Shizuoka-ken (JP)
(74) Representative: Leson, Thomas Johannes Alois, Dipl.-Ing.

(57) **Abstract**

Several embodiments of rotating electrical machines having a protruding wall provided as a wire guide at the forward end of an arm section of the insulator around which the coils are wound. Therefore, when a wire is wound around on the outside of the slots to form a coil on magnetic pole teeth, the wire at the coil end portion is guided toward a slot entrance between magnetic pole teeth, providing smooth wire winding action. In addition, this protruding wall prevents the wound wire on the magnetic pole teeth from slipping out from the slot.

## Description

### Background of Invention

This invention relates to rotating electrical machines and more particularly to an improved armature structure for such machines including an improved armature insulator.

Rotating electrical machines have been proposed for many applications. For example they may be used as a starter motor for an internal combustion engine.In such an application, a DC electric motor is powered from a battery for starting the engine. The starter motor generally comprises a stator comprising a cylindrical yoke with a plurality of magnets circumferentially bonded to an inner surface of the yoke. An armature (rotor) having coils arranged opposite the magnets and supplied with electrical current for driving a rotating shaft of the armature forming a output shaft of the starter motor. The motor output shaft drives a crankshaft of the engine via a reduction gear, an overrunning clutch for starting the engine in a well known manner.

The magnets may be ordinary magnets obtained by magnetizing a ferrite type magnetic material. The coils are formed by winding a wire (in general, a thin wire having a diameter of 0.9 mm or less) on each of a plurality of radially arrayed magnetic pole teeth of the armature. These pole teeth have a general T-shape. At this time, the core pole teeth are covered with insulators around which the wire is wound. In order to reduce the size and to increase the power, starter motors employing high-energy neodymium type magnets instead of the ferrite type magnets has been developed. When neodymium type magnets are employed, the thickness of the magnets can be decreased and the output of the motor can be enhanced. When such high-energy neodymium magnets are employed, the coils are formed using a wire having a diameter of about 1 mm or greater so that a current corresponding to the energy of the magnets can flow.

This thick wire has a high rigidity, so that it requires a large tensile force to wind the wire around a magnetic pole tooth to form a coil. Thus, a large pressing force corresponding to the tensile force is exerted on coil end surfaces of the magnetic pole tooth. A method and apparatus for forming such windings is disclosed in the application entitled "WINDING METHOD AND DEVICE FOR AN ARMATURE FOR ROTARY ELECTRIC MACHINES", Serial Number , filed concurrently herewith by the assignee hereof, based upon Japanese Application Serial Number 2001-271207, Filed September 7, 2001.

Although the method and apparatus described in that copending application is very effective in providing the coil winding, still further improvements can be made. Specifically, the configuration of the pole teeth and the insulator that at least partially surrounds the pole teeth at the area of the gap between the slots between the teeth can cause the wire of the winding to hang up rather than smoothly entering the slot. This can result in an interrupted winding action and the possibility of irregular coils. Furthermore, the contact of the wire with the edge of the insulator can cause damage to the insulation of the wire during the winding operation.

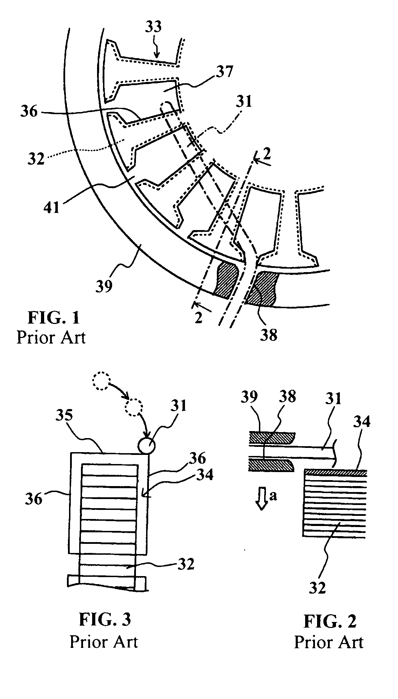

These problems can be best understood by reference to FIGS. 1 through 3 which show respectively a side elevational view of the winding apparatus during the winding operation, a cross sectional view taken along the line 2-2 thereof and a cross sectional view taken perpendicular to the cross section of FIG. 2, respectively. As shown in these figures, in forming the coil windings a thick wire 31 having a diameter of about 1 mm. or greater is wound around for each set of a given number (three in the figure) of radially extending magnetic pole teeth 32 of a laminated core indicated generally as 33. The core 33 is fitted with insulators 34 having leg portions at least partially covering the magnetic pole teeth 32. The insulators 34 are made of an insulating material, and prevents short circuit due to contact between the wire and the magnetic pole teeth 32.

The leg portions of insulators 34, as shown in FIG. 3, are of a channel shaped configuration and have a constant thickness. The channel shape is formed by cover coil end faces 35 that cover the radial outer surface of the magnetic pole teeth 32 and side faces 36 facing the slots 37 formed between the core teeth 32. An insulator 34 is positioned on both sides of the armature pole teeth 32 from above and below (only upper side of is shown). They each have a cross-section in the shape of substantially a letter C.

In accordance with the method described in the aforenoted copending application, the wire 31 is supplied from a nozzle 38 in a nozzle ring 39 that surrounds the core 33. The wire 31 is inserted into the slot 37 through a slot entrance 41 formed between enlargements formed at the ends of the pole teeth 32.

Then, the nozzle ring 39 or the core 33 is rotated and moved axially so that the nozzle 38 is moved relatively to the magnetic pole teeth 32 in a looping fashion to form a coil. When the nozzle ring 39 is moved and the wire 31 is inserted into the slot entrance 41, and specifically when the nozzle 38 is moved in the direction of arrow "a" as shown in the FIG. 2, the wire 31 comes in contact with a corner of the magnetic pole tooth 32 or a point near a corner of the insulator 34, as shown in FIG. 3.

Therefore, when winding is performed using the foregoing conventional insulators, the wire 31 first interferes with the magnetic pole tooth 32 (insulator 34) at its corner and then enters the slot 37, so that smooth winding action is prevented, resulting in a fair possibility of irregular coils. In addition, as a result of the contact of the wire 31 with the insulator 34 covering the magnetic pole teeth, at its sharp corner, the insulating coating of the wire 31 might be peeled off. Also, in the case of a thick wire, there is a fair possibility of the wire, wound around the magnetic pole teeth, slipping out from the slot entrance because of large stiffness of the wire 31.

Therefore it is a principal object of this invention to provide an insulator of an armature for rotary electric machines in which a wire can be wound around magnetic pole teeth smoothly and the wound wire can be held stably around the magnetic pole teeth, particularly when a coil is formed with a thick wire.

### Summary of Invention

A rotating electrical machine comprising an armature having a circular core of a magnetic material and a plurality of magnetic pole teeth extending radially from the circular core for cooperation with a plurality of circumferentially spaced permanent magnets. Each of the magnetic pole teeth defines a core of generally rectangular cross section with slots formed between circumferentially adjacent pole teeth. An insulator covers at least in part the cores of the magnetic pole teeth. Coil windings are wound around the cores of the magnetic pole teeth with the insulator being interposed there between. Each of the insulators has an axially extending protruding end portion on the opening sides of the slots for guiding the wire of the coil windings into the slots during the winding thereof.

### Brief Description of Drawings

FIG. 1 is partial top plan view showing a portion of the winding apparatus in the process of winding a coil in accordance with the prior art.

FIG. 2 is a cross sectional view taken along the line 2-2 of FIG. 1FIG. 3 is a end elevational view looking in a direction perpendicular to FIG. 2.

FIG. 4 is a cross sectional view taken generally along the axis of rotation of an electrical starter motor constructed in accordance with the invention.

FIG. 5 is a cross sectional view taken along the line 5-5 of FIG. 4.

FIG. 6 is a cross sectional view taken along the line 6-6 of FIG. 4 and shows the brush carrier arrangement of the motor.

FIG. 7 is a developed view the winding pattern for one of the coils.

FIG. 8 is an end elevational view showing the armature as shown in FIG. 5 with the winding apparatus disposed around it.

FIG. 9 is a view looking in the same direction as FIG. 8 but shows in more detail the winding apparatus.

FIG. 10 is a side elevational view of the apparatus as shown in FIG. 9.

FIG. 11 is an enlarged top plan view showing the winding apparatus.

FIG. 12 is a cross sectional view taken through the portion of the mechanism shown in FIG. 11.

FIG. 13 is a view, in part similar to FIG. 7, but shows the winding pattern.

FIG. 14 is a perspective view again showing the winding pattern.

FIG. 15 is view, in part similar to FIG. 1, but shows the winding in accordance with the invention.

FIG. 16 is a cross sectional view, in part similar to FIG. 2 and taken along the line 16-16 of FIG. 15.

FIG. 17 is an end elevational view, in part similar to FIG. 3, but showing the invention.

FIG. 18 is a top plan view of the insulator constructed in accordance with an embodiment of the invention.

FIG. 19 is a cross sectional view taken along the line 19-19 of FIG. 18.

FIG. 20 is a bottom plan view of the insulator shown in FIGS. 18 and 19.

FIG. 21 is a cross sectional view showing the insulator disposed over the laminated windings.

FIG. 22 is a view, in part similar to FIG. 17, but shows another embodiment of the invention.

FIG. 23 is a view, in part similar to FIGS. 17 and 22, and shows yet another embodiment of the invention.

FIG. 24 is a view, in part similar to FIGS. 17, 22 and 23, and shows another embodiment of the invention.

### Detailed Description

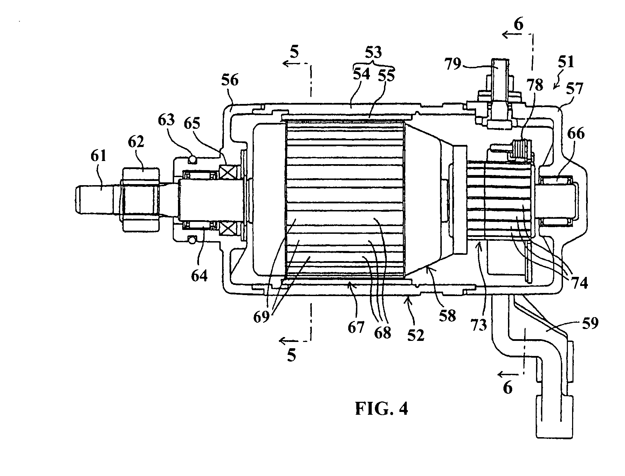

Referring now in detail to the drawings and initially to FIGS. 4 through 6, a starter motor for an internal combustion engine is indicated generally by the reference numeral 51. The starter motor 51 is constructed in accordance with an embodiment of the invention and although this specific application is illustrated, it should be readily apparent to those skilled in the art that the invention can be utilized with other types of rotating electrical machines.

The starter motor 51 is comprised of an outer housing assembly, indicated generally by the reference numeral 52, which includes a cylindrical yoke portion, indicated generally by the reference numeral 53. The yoke portion 53 is comprised of a cylindrical shell 54 on the inner surface of which are bonded a plurality of circumferentially spaced permanent magnets 55. In the illustrated embodiment, there are four such permanent magnets 55 and they are arranged with alternating plurality in a circumferential direction. Preferably, these permanent magnets 55 are formed from a neodymium type material that provides a high energy permanent magnet.

The housing 52 is completed by means of a front end cap 56 and rear end cap 57 that are affixed in any suitable manner to the ends of the yoke shell 54 to define an enclosed space in which a rotor in the form of an armature, indicated generally by the reference numeral 58 is journal led. The rear end cap 57 is formed with a mounting bracket 59 so as to permit attachment to the body of the associated engine.

The rotor or armature 58 is comprised of an armature shaft 61, the forward end of which carries a starter gear 62 for associated with the starter gear on the flywheel of the associated internal combustion engine. The end cap 57 has a projecting end in which an O-ring seal 63 is received so as to provide a good seal around the starter gear. This end of the armature shaft 61 is journaled in the end cap 57 by an anti-friction bearing 64. An oil seal 65 is disposed immediately to the rear of the bearing 64. In a like manner, the rear end of the armature shaft 61 is journaled in an anti-friction bearing 66 carried by the end cap 57.

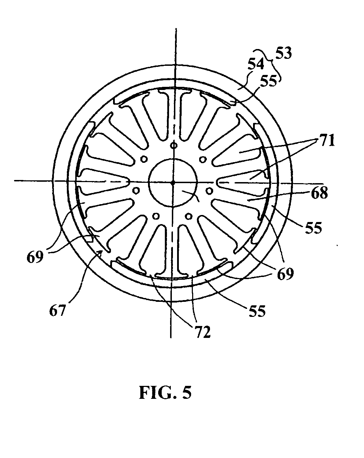

The armature 58 is comprised of a core, indicated generally by the reference numeral 67, and which has a construction as best shown in FIG. 5. This is comprised of a laminated core having a plurality of radially extending pole teeth 68 which have enlarged head portions 69. These pole teeth 68 are circumferentially spaced from each other to define slots 71 therebetween. The enlarged head portions 69 leave a narrow mouth 72 therebetween opening into the slots 71.

Although not shown in details in FIGS. 4 through 6, individual coil windings are formed around the pole teeth 68 preferably in the manner described in the aforenoted copending Application No. , based upon Japanese Application No. 2001-271207. The ends of these windings are connected, in a manner as described in the aforenoted co-pending application, to a commutator, indicated generally by the reference numeral 73 and specifically to the contact strips 74 thereof.

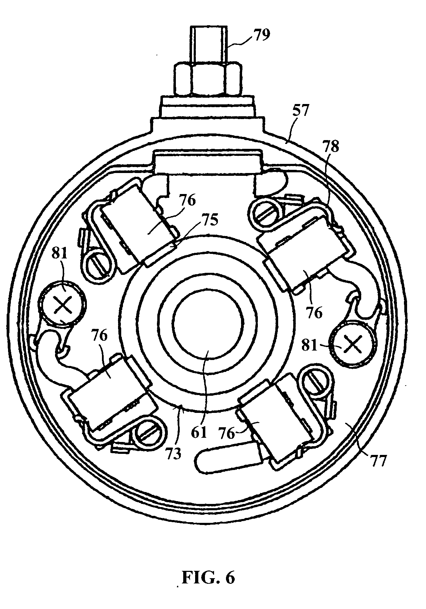

As best seen in FIG. 6, brushes 75 are carried by brush carriers 76 mounted on a commutator plate or brush holder 77. These brushes 75 are urged into engagement with the commutator strips 74 by springs 78.

The electrical current for energizing the windings is delivered through a terminal box 79 carried on the rear end cap 57. The electrical current is supplied to the brushes 75 from terminals 81. This electrical arrangement is of a type well known in the art and, for that reason; a detailed description of it is not believed to be necessary. Again, since the generally construction of the starter motor 51 is of the type well known in the art, its details of construction except for the except for the insulator assemblies around which the coil windings are formed may be of any type known in the art.

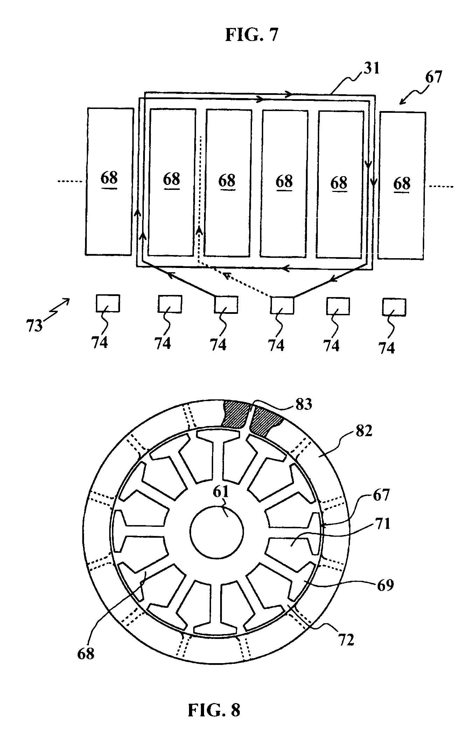

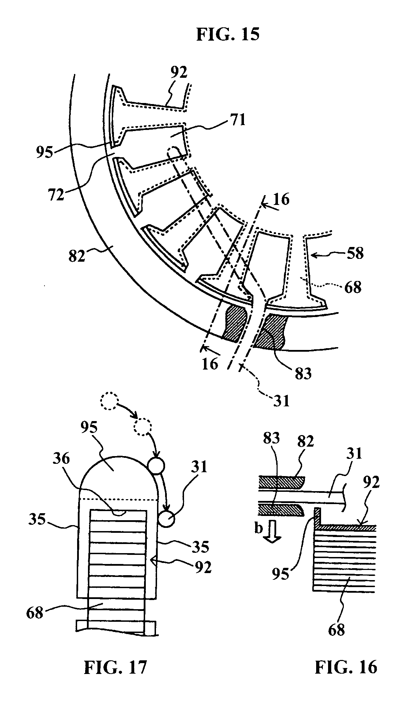

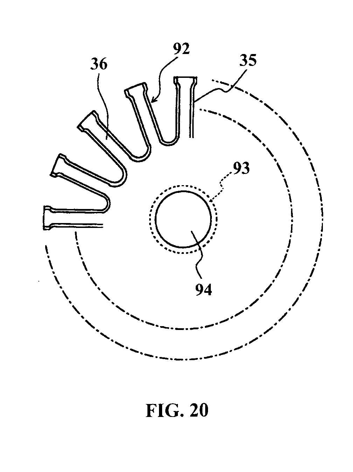

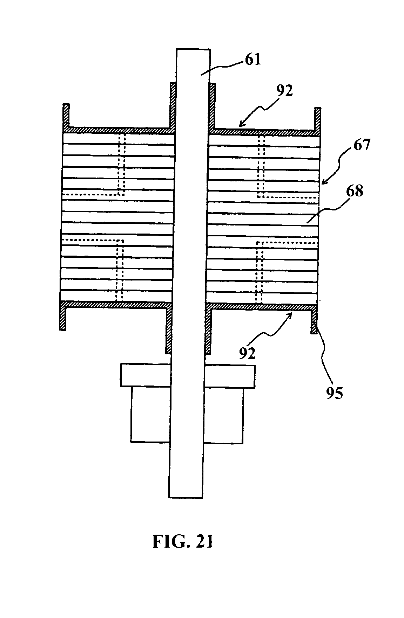

Although the invention deals with the construction of the insulators, to be described in more detail later by reference to FIGS. 15 through 24, it is believed that a description of at least a portion of the winding method and apparatus described in co-pending Application No. , will enable those skilled in the art to better understand and practice the invention. Therefore, this apparatus and method will now be described by primary reference to FIGS. 7 through 14.

Referring first to FIG. 7 is a schematic diagram showing an example of the aforenoted method of winding the coils. In forming the coils, the wire 31 is wound around for each set of a given number (four in the illustrated example) of magnetic pole teeth 68 twice to form a coil having two turns. One coil for each set of the four magnetic pole teeth is formed successively by changing the starting point of winding in a tooth by tooth pattern.

At this time, the starting end of the wire 31 of each coil is secured to a commutator strip 74 of one of middle two magnetic pole teeth 68 among the four magnetic pole teeth, and the terminating end thereof to the next commutator strip 74, as shown in FIG. 7. This terminal commutator strip 74 constitutes a starting end of the next coil. Thus, the wire 31 is secured to a commutator strip 74 corresponding to a magnetic pole tooth 68 located centrally of the given number of magnetic pole teeth 68 around which is wound the wire 31, therefore the coil is configured such that a wire 31 is led obliquely from the starting and terminating two commutator strips 74 for winding. This winding action of the wire 31 is repeated (or winding actions are performed simultaneously), and coils are formed successively with respect to all the commutator strips 74, one for each set of four magnetic pole teeth 68.

In this winding action, when a thick wire (1 mm. diameter or greater) is used, a nozzle supplying the wire makes two looping motions outside slots as shown in the figure to introduce a coil into the slots so as to form a coil around the magnetic pole teeth. In this invention, the same number of nozzles as the radial magnetic pole teeth 68 are provided, corresponding thereto, at the outside circumferential side of the core, and the same number of coils as the magnetic pole teeth are formed with respect to all the magnetic pole teeth 68 simultaneously from the outside circumferential side of the core 67.

FIG. 8 is a schematic view of a winding device for carrying out the foregoing simultaneous winding according to this invention, with a rotor set thereon. As has been noted, slots 71 are formed between radial magnetic pole teeth 68 armature 67. A nozzle ring 82 is mounted in surrounding relation to the armature 67. The nozzle ring 82 is provided with a number of nozzles 83 corresponding in number to the slots 71 (twelve in the figure), that is, as many nozzles 83 as there are slots 71.

Each nozzle 83 extends radially through the nozzle ring 82. The inside circumferential side end of the nozzle 83 constitutes an outlet of for the wire 31 is chamfered or rounded at the comer for protection of the insulating coating of the wire. The wire supplied from the nozzle 83 and inserted into a slot 71 through the respective slot entrance 72.

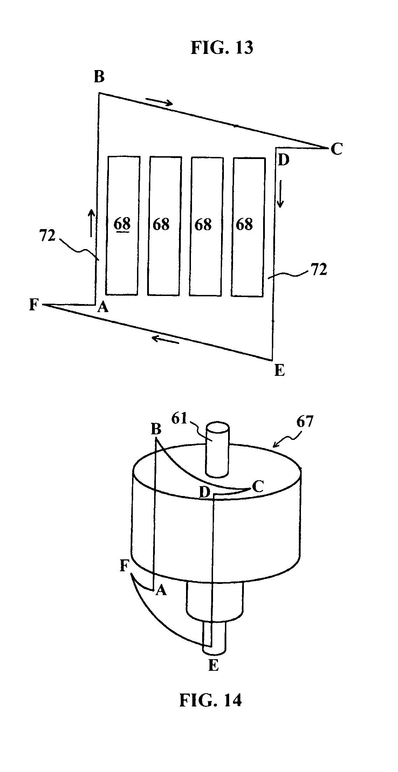

Then, one or both of the nozzle ring 82 and the core 67 is rotated and moved axially, causing each nozzle 83 to make a looping motion relative to the magnetic pole teeth 68, so that the wire is wound around the magnetic pole teeth 68 to form a coil. This motion will be described in more detail later by reference to FIGS. 13 and 14.

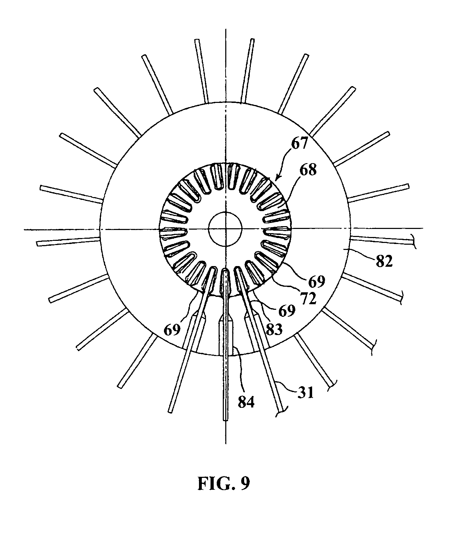

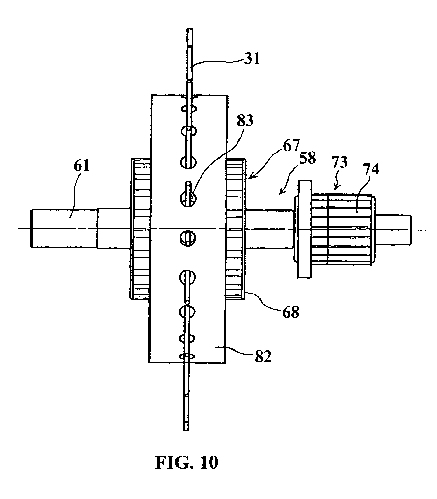

As shown in FIGS. 9 and 10, in this example the nozzle ring 82 is provided with twenty-one nozzles 83 each corresponding to the respective twenty-one slots 71 of the armature 67. The nozzle hole 83 passing radially through the nozzle ring 82, has a large diameter portion at the outer circumferential side, which constitutes a guide hole 84 (FIG. 9). The guide hole 84 serves as a guide for a wire to be inserted, and has a large diameter for easy insertion. A wire 31 of a given length corresponding to the length of one coil is passed through the guide hole 84 and inserted into the corresponding slot 71.

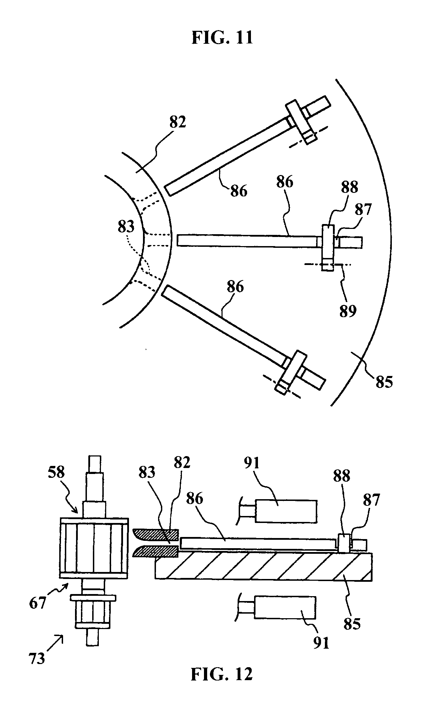

Referring now to FIGS. 11 and 12, the nozzle ring 82 is mounted on a rotatable turntable 85. A pipe 86 is provided on the turntable 85 at the outside of each nozzle hole 83. Each pipe 86 is formed, at its radially outer end, with a cutout 87 on the upper side. A stopper 88 pivotally mounted on a shaft 89 at each of the cutouts 87. The stopper 88 serves as a means of preventing the wire inserted in the pipe 86 from slipping out.

The armature 58 is positioned centrally of the nozzle ring 82. The wire passes through the pipe 86 to be supplied from the nozzle 83 in the nozzle ring 82 into a slot 71 of the armature 58. Over and under the turntable 85 are provided blade-driving cylinders 92 for use in wire winding to be described later.

The winding pattern and method will now be described by reference to FIGS. 13 and 14. As shown in these figures, when wire winding action is performed on four magnetic pole teeth 68, a nozzle opening 83 makes a looping motion through the path indicated at A□B□C□D□E□F□A. That is, the nozzle moves along one slot entrance 72 from position A to position B beyond one core tooth 68, and then circumferentially to position C beyond the slot entrance 72at the end of the core tooth group being wound. Then is returned at D to this end slot entrance 72.

Then, the nozzle 83 returns along the coil slot entrance 72 to position E beyond the other coil slot entrance 72. Then the nozzle 83 moves circumferentially to the position F beyond the initial slot entrance 72. It then returns along the coil end to the position A. This motion is repeated and a wire is wound around the magnetic pole teeth 68 to form a further coil.

Such a looping motion is performed using the foregoing nozzle ring 82 surrounding the armature core 67, with the nozzle 83 being moved on the outside of the slot 71 relatively to the core. The thick wire 31 supplied from the nozzle 83 is pulled out with curvature from the nozzle outlet and passes through the slot entrance 72 into the slot 71 to be wound around the magnetic pole teeth 68.

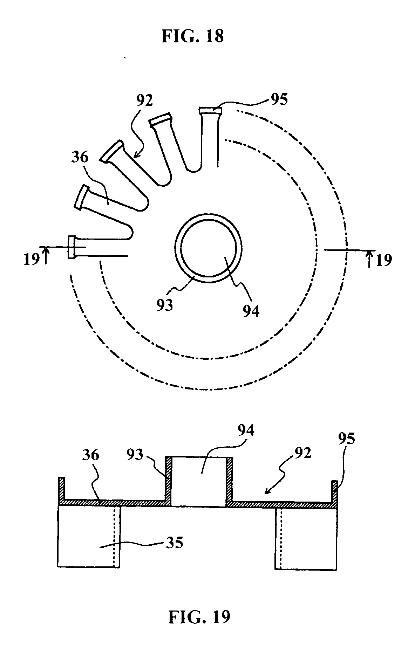

The insulator that forms the important part of the invention and around which the coils wound in the just described manner will now be described first by reference to FIGS. 18-20 Except as will be hereinafter noted, the insulator halves, indicated generally by the reference numerals 92, have the same general construction as the prior art. Therefore components that are the same or substantially the same have been identified by the reference characters utilized in FIGS. 1-3.

The insulator 92 is comprised of a central hub section 93 formed with a through hole 94 for passing the armature shaft 61. Protruding from the central hub section 93 leg portions at least partially covering the magnetic pole teeth 68. The insulators92are made of an insulating material, and prevents short circuit due to contact between the wire and the magnetic pole teeth 68.

The leg portions of insulators 92, as shown in FIG. 17, are of a channei shaped configuration and have a constant thickness. The channel shape is formed by cover coil end faces 35 that cover the radial outer surface of the magnetic pole teeth 68 and side faces 36 facing the slots 71formed between the core teeth 68 as with the prior art construction as shown in FIGS. 1-3. An insulator 92 is positioned on both sides of the armature pole teeth 68 from above and below (only upper side of is shown). They each have a cross-section in the shape of substantially a letter C.

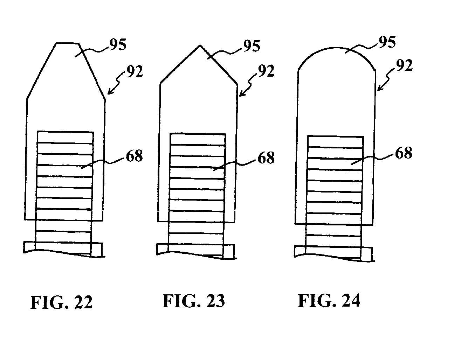

As shown in FIG. 18 in top plan, the insulator 92 according to this invention has upwardly protruded walls 95 at the peripheral ends of its arm sections 36. The shape of these protruding walls 95 may be of a trapezoidal shape as shown in FIG. 22, of a triangular shape as shown in FIG. 23 or of an elliptical or an oval shape in an arc as shown in FIGS. 17 and 24. In either case, a wire is guided by the side edge into the slots 71.

This action may be seen when comparing FIGS. 15-17 with FIGS. 1-3. Therefore, when the nozzle ring 82 is moved for insertion of the wire 31 into the slot entrance 72, that is, when the nozzle 83 is moved in the direction of arrow b as shown in FIG. 16 even if the wire 31 comes into contact with the insulator 92, it is guided smoothly by the side edge of the protruding wall 95 and introduced into the slot entrance 22 on the side of the magnetic pole tooth 68. In addition, the protruded wall 95 prevents the wire 31 wound around the magnetic pole tooth 68 from slipping out from the slot 71.

From the foregoing description a protruding wall is provided as a wire guide at the forward end of an arm section of the insulator. Therefore, when a wire is wound around on the outside of the slots to form a coil on magnetic pole teeth, the wire at the coil end portion is guided toward a slot entrance between magnetic pole teeth, providing smooth wire winding action. In addition, this protruding wall prevents the wound wire on the magnetic pole teeth from slipping out from the slot. Of course, the foregoing description is that of preferred embodiments of the invention and various changes and modifications may be made without departing from the spirit and scope of the invention, as defined by the appended claims.

## Claims

1. A rotating electrical machine comprising an armature having a circular core of a magnetic material and a plurality of magnetic pole teeth extending radially from said circular core for cooperation with a plurality of circumferentially spaced permanent magnets, each of said magnetic pole teeth defining a core of generally rectangular cross section with slots formed between circumferentially adjacent pole teeth, an insulator covering at least in part said cores of said magnetic pole teeth, coil windings wound around said cores of said magnetic pole teeth with said insulator being interposed there between, each of said insulators having an axially extending protruding end portion on the opening sides of said slots for guiding the wire of the coil windings into the slots during the winding thereof.

2. A rotating electrical machine as set forth in claim 1 wherein the insulator axially extending protruding end portions extend to a greater axial extent at the center of the pole teeth than at the sides adjacent the slots for moving the wire of the coil windings axially toward the slots during the winding thereof.

3. A rotating electrical machine as set forth in claim 2 wherein the insulator axially extending protruding end portions are tapered toward the slot sides thereof.

4. A rotating electrical machine as set forth in claim 2 wherein the insulator axially extending protruding end portions are curved toward the slot sides thereof.

5. A rotating electrical machine as set forth in claim 1 wherein the diameter of the wire of the coil windings is not less than 1 mm.

6. A rotating electrical machine as set forth in claim 1 wherein the core is formed by a plurality of laminated plates and the insulator has channel shaped portions surrounding at least the axial outermost of said laminations.

7. A rotating electrical machine as set forth in claim 6 wherein each of the magnetic pole teeth define an enlargement at the terminal ends of the cores to define a narrow mouth opening into the slots and the insulator axially extending protruding end portions surround the pole teeth enlargements.

8. A rotating electrical machine as set forth in claim 7 wherein the insulator axially extending protruding end portions extend to a greater axial extent at the center of the pole teeth than at the sides adjacent the slots for moving the wire of the coil windings axially toward the slots during the winding thereof.

9. A rotating electrical machine as set forth in claim 8 wherein the insulator axially extending protruding end portions are tapered toward the slot sides thereof.

10. A rotating electrical machine as set forth in claim 8 wherein the insulator axially extending protruding end portions are curved toward the slot sides thereof.
